# EUROPEAN PATENT APPLICATION

(11) **EP 4 582 996 A1**
(43) Date of publication of application: **09.07.2025**
(21) Application number: 24223785.7
(22) Date of filing: 30.12.2024
(51) Int. Cl.: G06F 30/27, G06N 3/042

(54) **AUTOMATED DESIGN EXPLORATION THROUGH NEUROSYMBOLIC REASONING**

(30) Priority: 03.01.2024 US 202463617299 P; 08.11.2024 US 202418941144
(71) Applicant: RTX Corporation, Farmington, CT 06032 (US)
(72) Inventor: BHATIA, Amit, Farmington, 06032 (US); KIRSCH, Kathryn L., Farmington, 06032 (US); PINELLO, Claudio, Farmington, 06032 (US)
(74) Representative: Dehns

(57) **Abstract**

A method of designing a component (120) includes the steps of 1) inputting operator desired performance (114) of a final component (120) into a neural function-learning based module (115), and utilizing the neural function-learning based module (115) to reach desired structural features for the component (120), 2) generating a physically realizable design in a design realization module (112; 212) based on the structural features and 3) evaluating the physically realizable design in an evaluation module (117; 217; 156), and utilizing evaluation module output to determine performance results for the physically realizable design. A system (138; 238) is also disclosed.

## Description

### TECHNICAL FIELD

This application relates to an automated design method and system that explores a large number of possible designs and evaluates them.

### BACKGROUND

Modern design processes utilize any number of computer systems to evaluate the potential performance for a particular component design.

In one example, fluid cooling structure in a gas turbine engine component may be designed using such systems.

### SUMMARY

In an aspect of the present invention, a method of designing a component includes the steps of 1) inputting operator desired performance of a final component into a neural function-learning based module, and utilizing the neural function-learning based module to reach desired structural features for the component, 2) generating a physically realizable design in a design realization module based on the structural features and 3) evaluating the physically realizable design in an evaluation module, and utilizing evaluation module output to determine performance results for the physically realizable design.

In an embodiment of the above, the steps 1)-3) are then repeated to optimize the performance of the physically realizable design.

In another embodiment according to any of the previous embodiments, an initial design module provides an initial design into the design realization module.

In another embodiment according to any of the previous embodiments, the initial design module, the design realization module and the evaluation module are all rule-based modules which are operating in combination with the neural function-learning based module.

In another embodiment according to any of the previous embodiments, the initial design module also receives an operator input to an initial design neural function-learning based module that in turn provides constraints to the initial design module.

In another embodiment according to any of the previous embodiments, the physically realizable design is for a cooling (i.e., fluid flow) circuit in the final component.

In another embodiment according to any of the previous embodiments, the initial design includes fluid flow passages.

In another embodiment according to any of the previous embodiments, the operator desired performance includes at least one of a pressure drop, a thermal resistance and a surface area of heat transfer structure within the cooling circuit, and the structural features provided by the neural function-learning based module to the design realization module include a number of heat transfer pedestals, and a minimum and maximum sizes for the heat transfer pedestals.

In another embodiment according to any of the previous embodiments, the results from the evaluation module are utilized to train the neural function-learning based module.

In another embodiment according to any of the previous embodiments, the evaluation module is also provided with operator input to an evaluation neural function-learning based module which provides constraints on the evaluation module.

In another embodiment according to any of the previous embodiments, the operator input to the neural function-learning based module to the evaluation neural function-learning based module includes at least one of stopping the method should the difference in performance from the previous evaluated design be with a minimum amount from a current evaluation of performance, a number of iterations, or a time that the method has been running.

In another embodiment according to any of the previous embodiments, the component is manufactured after a final design is reached.

In another aspect of the present invention, a method of designing a component includes the steps of 1) inputting operator desired structure parameters for a component to a design realization module, 2) generating a physically realizable design in the design realization module based on the structure parameters and 3) evaluating the physically realizable design in an evaluation module, and utilizing evaluation module output to determine performance results for the physically realizable design.

In an embodiment of the above, the physically realizable design is for a cooling circuit in the final component.

In another embodiment according to any of the previous embodiments, the desired structure parameters includes details of heat transfer pedestals.

In another aspect of the present invention, a system for designing a component including an operator input operable to input desired features of a final component. A control includes processing circuitry and one or more modules to utilize the operator input to determine desired structural features for the final component at a design realization module. An output of the design realization module operable is sent to an evaluation module which is operable to compare the output of the design realization module to the operator desired features.

In an embodiment of the above, the operator input includes performance parameters communicated to a neural function-learning based module, the neural function-learning based module being operable to take in the performance parameters and reach structural features for the component, the neural function-learning based module operable to communicate with the design realization module, the design realization module being operable to design a physically realizable design based on the structural features.

In another embodiment according to any of the previous embodiments, further includes an initial module programmed to develop an initial design and communicate the initial design into the design realization module.

In another embodiment according to any of the previous embodiments, the final component has a fluid flow (i.e., cooling) circuit, the physically realizable design is of the fluid flow circuit and the operator input includes at least one of a desired pressure drop, a desired thermal resistance, or a desired surface area of heat transfer structure within the cooling circuits, and the neural function-learning based module is operable to determine and provide a desired number of heat transfer pedestals and a minimum and maximum sizes for the heat transfer pedestals to the design realization module.

In another embodiment according to any of the previous embodiments, the evaluation module is operable to train the neural function-based learning module.

The present disclosure may include any one or more of the individual features disclosed above and/or below alone or in any combination thereof.

These and other features of the present invention can be best understood from the following specification and drawings, the following of which is a brief description.

### BRIEF DESCRIPTION OF THE DRAWINGS

Figure 1A schematically shows a gas turbine engine.
Figure 1B shows a gas turbine engine component that could be designed utilizing the method of this disclosure.
Figure 1C shows a detail of the Figure 1B component.
Figure 2A is a graphic representation of a system to perform a design method.
Figure 2B shows a detail of the output from a portion of the Figure 2A system.
Figure 2C schematically shows a computer that can incorporate the Figure 2A system.
Figure 2D is an alternative to the Figure 2A system.
Figure 3 shows another feature which can be incorporated into the Figure 2A system.
Figure 4 shows another feature that can be incorporated into the Figure 2A system.
Figure 5 is a flow chart of a method according to this disclosure.

### DETAILED DESCRIPTION

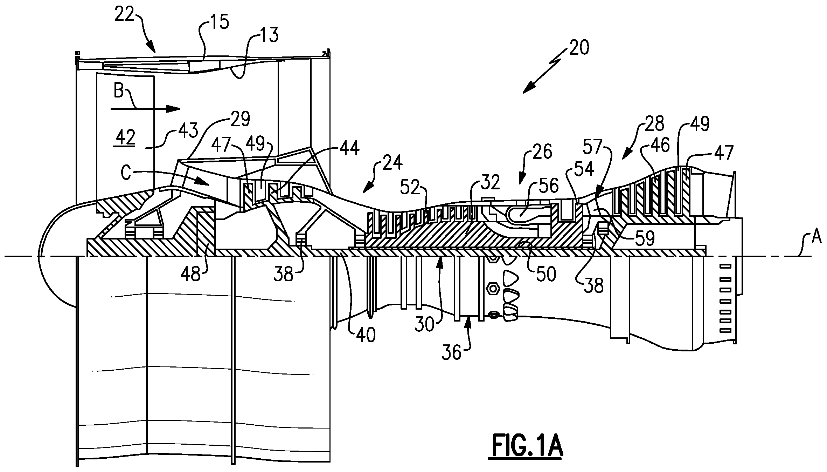

Figure 1A schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 may include a single-stage fan 42 having a plurality of fan blades 43. The fan blades 43 may have a fixed stagger angle or may have a variable pitch to direct incoming airflow from an engine inlet. The fan 42 drives air along a bypass flow path B in a bypass duct 13 defined within a housing 15 such as a fan case or nacelle, and also drives air along a core flow path C for compression and communication into the combustor section 26 then expansion through the turbine section 28. A splitter 29 aft of the fan 42 divides the air between the bypass flow path B and the core flow path C. The housing 15 may surround the fan 42 to establish an outer diameter of the bypass duct 13. The splitter 29 may establish an inner diameter of the bypass duct 13. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures. The engine 20 may incorporate a variable area nozzle for varying an exit area of the bypass flow path B and/or a thrust reverser for generating reverse thrust.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in the exemplary gas turbine engine 20 is illustrated as a geared architecture 48 to drive the fan 42 at a lower speed than the low speed spool 30. The inner shaft 40 may interconnect the low pressure compressor 44 and low pressure turbine 46 such that the low pressure compressor 44 and low pressure turbine 46 are rotatable at a common speed and in a common direction. In other embodiments, the low pressure turbine 46 drives both the fan 42 and low pressure compressor 44 through the geared architecture 48 such that the fan 42 and low pressure compressor 44 are rotatable at a common speed. Although this application discloses geared architecture 48, its teaching may benefit direct drive engines having no geared architecture. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core flow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The fan 42 may have at least 10 fan blades 43 but no more than 20 or 24 fan blades 43. In examples, the fan 42 may have between 12 and 18 fan blades 43, such as 14 fan blades 43. An exemplary fan size measurement is a maximum radius between the tips of the fan blades 43 and the engine central longitudinal axis A. The maximum radius of the fan blades 43 can be at least 40 inches, or more narrowly no more than 75 inches. For example, the maximum radius of the fan blades 43 can be between 45 inches and 60 inches, such as between 50 inches and 55 inches. Another exemplary fan size measurement is a hub radius, which is defined as distance between a hub of the fan 42 at a location of the leading edges of the fan blades 43 and the engine central longitudinal axis A. The fan blades 43 may establish a fan hub-to-tip ratio, which is defined as a ratio of the hub radius divided by the maximum radius of the fan 42. The fan hub-to-tip ratio can be less than or equal to 0.35, or more narrowly greater than or equal to 0.20, such as between 0.25 and 0.30. The combination of fan blade counts and fan hub-to-tip ratios disclosed herein can provide the engine 20 with a relatively compact fan arrangement.

The low pressure compressor 44, high pressure compressor 52, high pressure turbine 54 and low pressure turbine 46 each include one or more stages having a row of rotatable airfoils. Each stage may include a row of vanes adjacent the rotatable airfoils. The rotatable airfoils are schematically indicated at 47, and the vanes are schematically indicated at 49.

The low pressure compressor 44 and low pressure turbine 46 can include an equal number of stages. For example, the engine 20 can include a three-stage low pressure compressor 44, an eight-stage high pressure compressor 52, a two-stage high pressure turbine 54, and a three-stage low pressure turbine 46 to provide a total of sixteen stages. In other examples, the low pressure compressor 44 includes a different (e.g., greater) number of stages than the low pressure turbine 46. For example, the engine 20 can include a five-stage low pressure compressor 44, a nine-stage high pressure compressor 52, a two-stage high pressure turbine 54, and a four-stage low pressure turbine 46 to provide a total of twenty stages. In other embodiments, the engine 20 includes a four-stage low pressure compressor 44, a nine-stage high pressure compressor 52, a two-stage high pressure turbine 54, and a three-stage low pressure turbine 46 to provide a total of eighteen stages. It should be understood that the engine 20 can incorporate other compressor and turbine stage counts, including any combination of stages disclosed herein.

The engine 20 may be a high-bypass geared aircraft engine. The bypass ratio can be greater than or equal to 10.0 and less than or equal to about 18.0, or more narrowly can be less than or equal to 16.0. The geared architecture 48 may be an epicyclic gear train, such as a planetary gear system or a star gear system. The epicyclic gear train may include a sun gear, a ring gear, a plurality of intermediate gears meshing with the sun gear and ring gear, and a carrier that supports the intermediate gears. The sun gear may provide an input to the gear train. The ring gear (e.g., star gear system) or carrier (e.g., planetary gear system) may provide an output of the gear train to drive the fan 42. A gear reduction ratio may be greater than or equal to 2.3, or more narrowly greater than or equal to 3.0, and in some embodiments the gear reduction ratio is greater than or equal to 3.4. The gear reduction ratio may be less than or equal to 4.0. The fan diameter is significantly larger than that of the low pressure compressor 44. The low pressure turbine 46 can have a pressure ratio that is greater than or equal to 8.0 and in some embodiments is greater than or equal to 10.0. The low pressure turbine pressure ratio can be less than or equal to 13.0, or more narrowly less than or equal to 12.0. Low pressure turbine 46 pressure ratio is pressure measured prior to an inlet of low pressure turbine 46 as related to the pressure at the outlet of the low pressure turbine 46 prior to an exhaust nozzle. It should be understood, however, that the above parameters are only exemplary of one embodiment of a geared architecture engine and that the present invention is applicable to other gas turbine engines including direct drive turbofans. All of these parameters are measured at the cruise condition described below.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of Ibm of fuel being burned divided by Ibf of thrust the engine produces at that minimum point. The engine parameters described above, and those in the next paragraph are measured at this condition unless otherwise specified.

"Fan pressure ratio" is the pressure ratio across the fan blade 43 alone, without a Fan Exit Guide Vane ("FEGV") system. A distance is established in a radial direction between the inner and outer diameters of the bypass duct 13 at an axial position corresponding to a leading edge of the splitter 29 relative to the engine central longitudinal axis A. The fan pressure ratio is a spanwise average of the pressure ratios measured across the fan blade 43 alone over radial positions corresponding to the distance. The fan pressure ratio can be less than or equal to 1.45, or more narrowly greater than or equal to 1.25, such as between 1.30 and 1.40. "Corrected fan tip speed" is the actual fan tip speed in ft/sec divided by an industry standard temperature correction of [(Tram °R) / (518.7 °R)]^{0.5}. The corrected fan tip speed can be less than or equal to 1150.0 ft / second (350.5 meters/second), and can be greater than or equal to 1000.0 ft / second (304.8 meters/second).

The fan 42, low pressure compressor 44 and high pressure compressor 52 can provide different amounts of compression of the incoming airflow that is delivered downstream to the turbine section 28 and cooperate to establish an overall pressure ratio (OPR). The OPR is a product of the fan pressure ratio across a root (i.e., 0% span) of the fan blade 43 alone, a pressure ratio across the low pressure compressor 44 and a pressure ratio across the high pressure compressor 52. The pressure ratio of the low pressure compressor 44 is measured as the pressure at the exit of the low pressure compressor 44 divided by the pressure at the inlet of the low pressure compressor 44. In examples, a sum of the pressure ratio of the low pressure compressor 44 and the fan pressure ratio is between 3.0 and 6.0, or more narrowly is between 4.0 and 5.5. The pressure ratio of the high pressure compressor ratio 52 is measured as the pressure at the exit of the high pressure compressor 52 divided by the pressure at the inlet of the high pressure compressor 52. In examples, the pressure ratio of the high pressure compressor 52 is between 9.0 and 12.0, or more narrowly is between 10.0 and 11.5. The OPR can be equal to or greater than 45.0, and can be less than or equal to 70.0, such as between 50.0 and 60.0. The overall and compressor pressure ratios disclosed herein are measured at the cruise condition described above, and can be utilized in two-spool architectures such as the engine 20 as well as three-spool engine architectures.

The engine 20 establishes a turbine entry temperature (TET). The TET is defined as a maximum temperature of combustion products communicated to an inlet of the turbine section 28 at a maximum takeoff (MTO) condition. The inlet is established at the leading edges of the axially forwardmost row of airfoils of the turbine section 28, and MTO is measured at maximum thrust of the engine 20 at static sea-level and 86 degrees Fahrenheit (°F). The TET may be greater than or equal to 2700.0 °F, or more narrowly less than or equal to 3500.0 °F, such as between 2750.0 °F and 3350.0 °F. The relatively high TET can be utilized in combination with the other techniques disclosed herein to provide a compact turbine arrangement.

The engine 20 establishes an exhaust gas temperature (EGT). The EGT is defined as a maximum temperature of combustion products in the core flow path C communicated to at the trailing edges of the axially aftmost row of airfoils of the turbine section 28 at the MTO condition. The EGT may be less than or equal to 1000.0 °F, or more narrowly greater than or equal to 800.0 °F, such as between 900.0 °F and 975.0 °F. The relatively low EGT can be utilized in combination with the other techniques disclosed herein to reduce fuel consumption.

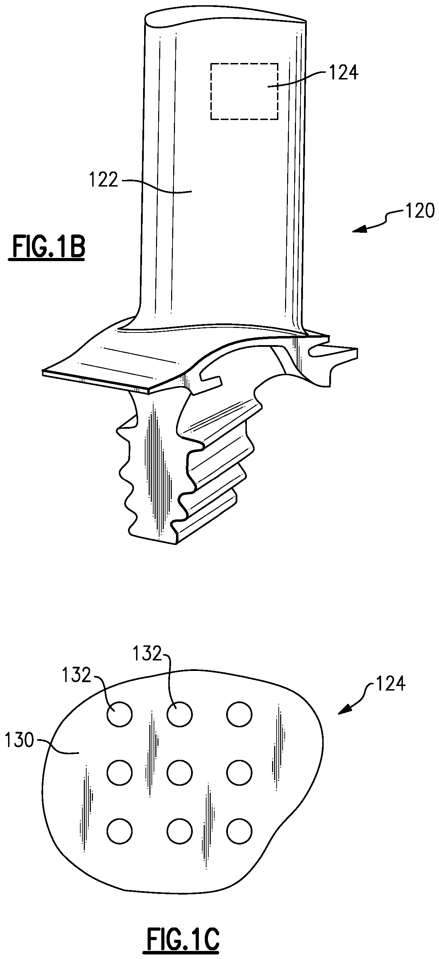

Figure 1B shows a gas turbine engine component 120, shown here as a blade such as a compressor or turbine blade having airfoil 122. An internal cooling circuit 124 is shown schematically. While a blade and airfoil is disclosed, other components may also benefit from the teachings of this disclosure.

Figure 1C shows an example of a cooling fluid circuit 124 having a plurality of heat transfer fins 132 and open fluid passageways 130 formed in component 120.

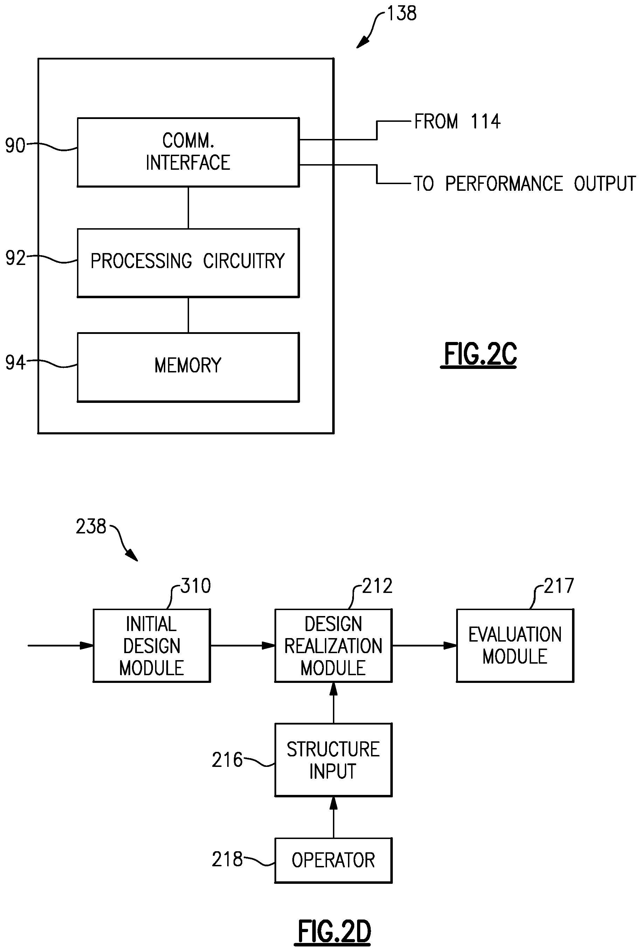

It would be desirable to propose designs for the structure of the cooling circuit 124, and evaluate their performance. In one embodiment (shown in Figure 2D below), a human operator inputs structural features about heat transfer elements, such as a number of cylindrical pins per unit area, a minimum diameter for the pins, a maximum diameter, etc. A plurality of modules would then design a proposed cooling circuit to meet those inputs. That design is then evaluated for manufacturing realizability. Then a performance evaluation is provided on the design. This process can continue in an iterative manner until a final design is reached.

The disclosed techniques may be utilized to design various arrangements of heat transfer features in an internal flow path of a component. While cylindrical pins are specifically disclosed, other shapes such as oblong, square, airfoil shaped, etc. could be utilized. Thus, generically, this disclosure can assist in the design of heat transfer pedestals, along with minimum and maximum sizes for the heat transfer pedestals.

Rule-based modules can extend human driven inputs, but they are limited in accounting for performance criteria in the directions to take a further design exploration. Purely data-driven techniques, such as convolutional neural networks, try to learn design choices that lead to better performance, but are unable to guarantee correctness of a solution in terms of underlying constraints.

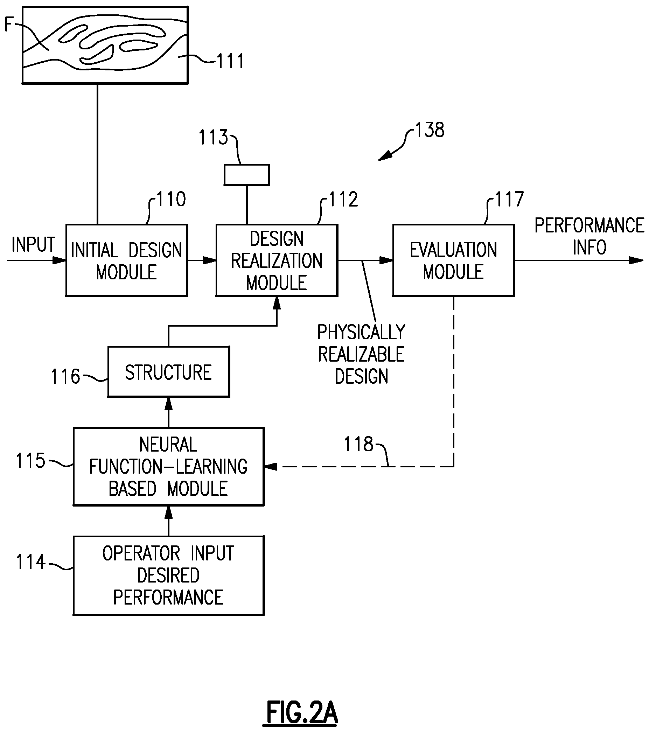

Figure 2A shows a system 138 for reaching a design that will be closer to optimal compared to the Figure 2D embodiment. An initial design module 110 receives input parameters, such as inlet flow condition (pressure, temperature, Reynolds number) and the amount of heat that needs to be removed across a cooling circuit. The initial design module 110 may be, as an example, a commercial physics solver.

As shown at 111, the initial design module 110 receives an input and reaches an initial structure for the two-dimensional cooling circuit 124 to meet the input parameters. This is shown as proposed flow passages F.

A design realization module 112 is utilized to reach a design based upon the initial design module model based upon initial structure F.

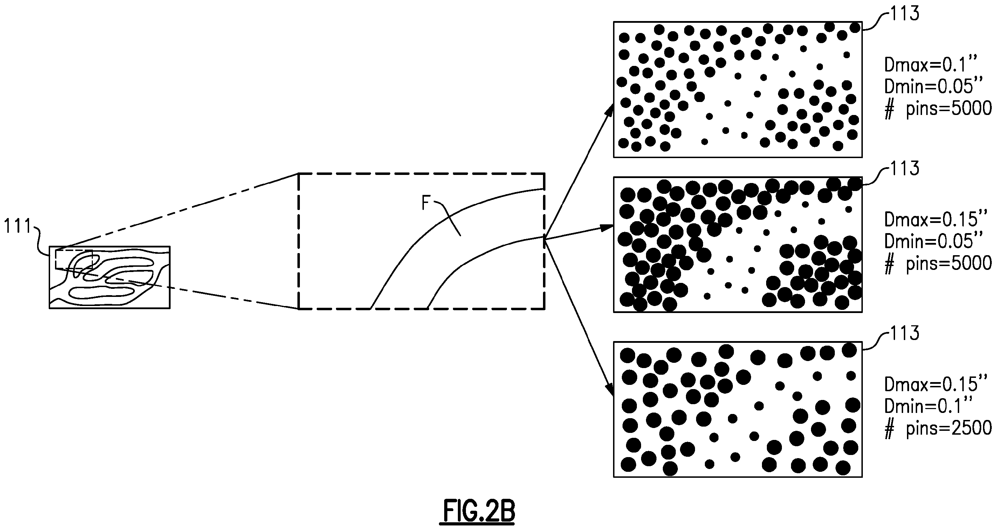

As shown at 113 in Figure 2B, the design from the design realization module 112 includes proposed numbers and sizes for heat transfer pedestals in the flow passages F. As can be appreciated the structure parameters vary across the three illustrated designs.

An in-house code takes the output from design realization module 112 and creates a geometric representation of the heat transfer pedestals shown in 113 in Figure 2B: pedestals are defined as solid material, with fluid material filling the rest of the domain. These geometric representations are needed for the performance evaluation of each design. Commercially available systems can perform this function.

Returning to Figure 2A, operator input 114 inputs desired performance, rather than structural features as described below, into a neural function-learning based module 115. Thus, the operator may input desired pressure drop, thermal resistance, surface area, etc. In implementations, the neural function-learning based module 115 may include a neural network or other machine learning model, which may be trained utilizing one or more supervised and/or unsupervised data sets. The neural network may include one or more layers. The data set may include a relationship between one or more performance parameters (e.g., inputs) and one or more design parameters (e.g., outputs), including any of the performance and design parameters disclosed herein. The model 115 may be closed once trained or may be updated iteratively based on use of the system 138.

The neural function-learning based module 115 will then select (e.g., desired) structural parameters (e.g., constraints) at 116 to meet the desired performance. As an example, the structural features could be the number of heat transfer pins per unit of area, a minimum pin diameter, a maximum pin diameter, etc.

The structure parameters 116 are fed into the design realization module 112, and those structural inputs are utilized to reach the designs 113.

As shown in Figure 2B, the design realization module 112 also determines whether the design is physically realizable. The examples as shown in Figure 2B, at 113 would be two dimensional realizable designs.

Returning to Figure 2A, the output of the design realization module 112 is then passed to an evaluation module 117 which provides performance evaluation and outputs performance information. The output information includes the actual results of the operator input desired performance, such as pressure drop, thermal resistance, surface area, etc. The two can then be compared to determine the acceptability of the design.

As shown at 118, optionally each output of the evaluation module 117 updates the neural function-learning based module 115.

The neural functional-learning based module 115 is initially trained on a data set previously developed from the evaluation module 117, or a similar system.

As such, the overall process is much more likely to evaluate distinct designs, when compared to a human developed input. As can be appreciated, there are an infinite number of potential designs, and the disclosed system is more likely to aggressively and fully evaluate those designs than human entered structure parameters.

In one embodiment the evaluation module 117 is a general-purpose computational fluid dynamic software used to model fluid flow, heat and mass transfer, chemical reactions.

Figure 2C schematically shows an example implementation of the system 138 of Figure 2A. The system 138 may include processing circuitry 92 operatively connected to memory 94 and a communication interface 90. The processing circuitry 92 may include one or more microprocessors, microcontrollers, application specific integrated circuits (ASICs), or the like. The memory 94 may include any one or combination of volatile memory elements (e.g., random access memory (RAM, such as DRAM, SRAM, SDRAM, VRAM, etc.) and/or nonvolatile memory elements (e.g., ROM, hard drive, tape, CD-ROM, etc.). Moreover, the memory 94 may incorporate electronic, magnetic, optical, and/or other types of storage media. The memory 94 stores instructions which, when executed by the processing circuitry 92, cause the processing circuitry 92 to implement the various features discussed herein.

The modules from Figure 2A may be within processing circuitry 92. The communication interface 90 is operable to facilitate communication between the operator input 114 and other devices, such as the output from the evaluation module.

Figure 2D shows a system 238 as mentioned above. Here the initial design module 310, design realization module 212 and evaluation module 217 may all function not unlike the corresponding modules in Figure 2A. However, the system 238 shown in Figure 2D has the operator 218 input structural parameters. That is, the operator inputs the structural parameter that are generated by the neural function-learning based module 115 in the Figure 2A system. Examples may be the number of heat transfer fins per unit area and minimum/maximum diameters for the pins.

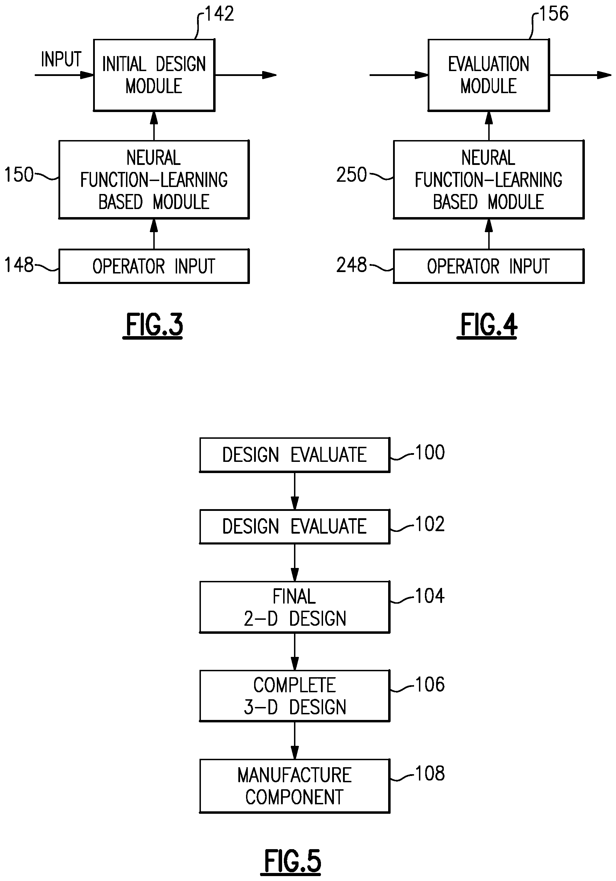

Figure 3 shows an optional feature wherein the initial design module 142 is provided with operator input 148 into a neural function-learning based module 150. The operator input may be, as an example, a designed total fluid space percentage across the cooling circuit.

Other inputs might be a thermal capacity of a material to be utilized to explore the design space or pressure drop, as examples.

The learning based module 150 may be trained on a data set to reach a desired percentage fluid flow at the initial design module 142. Downstream of the initial design module 142 there would be a design realization module and evaluation module.

Figure 4 shows another optional feature wherein the evaluation module 156 receives operator input 248 into a neural function-learning based module 250. Again, module 250 may be trained on prior data. The operator input 248 may be when to stop revising a design, and passing a new design back through the flow chart, such as perhaps seeing if the performance from the prior evaluation has changed by less than one percent. Also, the number of iterations or the time that the design process has been ongoing may be utilized as the operator input. Upstream of evaluation module 156 is an initial design module and a design realization module.

All of modules 110/112/117/142/156 could be thought of as symbolic rule based modules. In the embodiments of Figures 3 or 4, the neural function-learning based modules 150/250 could be separate from neural function-learning based module 115, or they could be combined into a single module.

Figure 5 is a flow chart of a method according to this disclosure. Any of the modules disclosed herein may be programmed to implement any steps of the method. An initial design is reached and evaluated at step 100. This is essentially the Figure 2A system. At step 102, step 100 may be repeated. At some point, a final 2-D design is reached at step 104. Engineers, or systems, then complete a 3-D design of the component at step 106. The component is then manufactured at step 108. Of course, step 106 may actually include a great number of sub steps. Still, by utilizing the method of this disclosure, the final 2-D design reached at step 104 will be closer to optimum given the desired performance parameters than with the prior art methods.

A method of designing a component under this disclosure could be said to include the steps of inputting operator desired performance of a final component into a neural function-learning based module. Then, the neural function-learning based module is utilized to reach desired structure for the component. Then, generating a physically realizable design in a design realization module. And finally evaluating the physically realizable design in an evaluation module, and utilizing evaluation module output to determine performance results for the physically realizable design.

Another method of designing a component under this disclosure could be said to include the steps of inputting operator desired structure parameters of a final component into a design realization module. The method may include generating a physically realizable design in the design realization module based on the structure parameters. Then, the method may include evaluating the physically realizable design in an evaluation module, and utilizing evaluation module output to determine performance information for the physically realizable design.

A system for designing a component under this disclosure could be said to include an operator input operable to input desired features of a final component. A control includes processing circuitry and modules to utilize the operator input to reach desired structural features for the final component at a design realization module. An output of the design realization module is operable to be sent to an evaluation module which is operable to compare the output of the design realization module to the desired features.

While the disclosure is with regard to the design of fluid flow characteristics for a gas turbine engine component, it should be understood that other components for fields even outside fluid flow can benefit from this disclosure.

Although embodiments have been disclosed, a worker of ordinary skill in this art would recognize that modifications would come within the scope of this disclosure. For that reason, the following claims should be studied to determine the true scope and content of this disclosure.

## Claims

1. A method of designing a component (120) comprising the steps of:
1) inputting operator desired performance (114) of a final component (120) into a neural function-learning based module (115), and utilizing the neural function-learning based module (115) to reach desired structural features for the component (120);
2) generating a physically realizable design in a design realization module (112; 212) based on the structural features; and
3) evaluating the physically realizable design in an evaluation module (117; 217; 156), and utilizing evaluation module output to determine performance results for the physically realizable design.

2. The method as set forth in claim 1, wherein the steps 1)-3) are then repeated to optimize the performance of the physically realizable design.

3. The method as set forth in claim 1 or 2, wherein an initial design module (110; 310; 142) provides an initial design into the design realization module (112; 212).

4. The method as set forth in claim 3, wherein the initial design module (110), the design realization module (112; 212) and the evaluation module (117; 217; 156) are all rule-based modules which are operating in combination with the neural function-learning based module (115).

5. The method as set forth in claim 3 or 4, wherein the initial design module (142) also receives an operator input (148) to an initial design neural function-learning based module (150) that in turn provides constraints to the initial design module (142).

6. The method as set forth in any preceding claim, wherein the physically realizable design is for a cooling circuit (124) in the final component (120), and optionally wherein the initial design includes fluid flow passages (130).

7. The method as set forth in claim 6, wherein the operator desired performance includes at least one of a pressure drop, a thermal resistance and a surface area of heat transfer structure within the cooling circuit (124), and the structural features provided by the neural function-learning based module to the design realization module include a number of heat transfer pedestals, and a minimum and maximum sizes for the heat transfer pedestals.

8. The method as set forth in any preceding claim, wherein the results from the evaluation module (117; 217; 156) are utilized to train the neural function-learning based module (115).

9. The method as set forth in any preceding claim, wherein the evaluation module (156) is also provided with operator input (248) to an evaluation neural function-learning based module (250) which provides constraints on the evaluation module (156), and optionally wherein the operator input (248) to the evaluation neural function-learning based module (250) includes at least one of: stopping the method should the difference in performance from the previous evaluated design be with a minimum amount from a current evaluation of performance; a number of iterations; or a time that the method has been running.

10. The method as set forth in any preceding claim, wherein the component (120) is manufactured after a final design is reached.

11. A system (138; 238) for designing a component (120) comprising:
an operator input (114) operable to input desired features of a final component (120);
a control including processing circuitry (92) and one or more modules to utilize the operator input (114) to determine desired structural features for the final component (120) at a design realization module (112; 212); and
an output of the design realization module (112; 212) operable to be sent to an evaluation module (117; 217; 156) which is operable to compare the output of the design realization module (112; 212) to the operator desired features.

12. The system as set forth in claim 11, wherein said operator input (114) includes performance parameters communicated to a neural function-learning based module (115), the neural function-learning based module (115) being operable to take in the performance parameters and reach structural features for the component (120), the neural function-learning based module (115) operable to communicate with the design realization module (112; 212), the design realization module (112; 212) being operable to design a physically realizable design based on the structural features.

13. The system as set forth in claim 12, further comprising an initial design module (110; 310; 142) programmed to develop an initial design and communicate the initial design into the design realization module (112; 212).

14. The system as set forth in claim 12 or 13, wherein the final component (120) has a fluid flow circuit (124), the physically realizable design is of the fluid flow circuit (124) and the operator input (114) includes at least one of a desired pressure drop, a desired thermal resistance, or a desired surface area of heat transfer structure within the fluid flow circuit, and the neural function-learning based module (115) is operable to determine and provide a desired number of heat transfer pedestals and a minimum and maximum sizes for the heat transfer pedestals to the design realization module (112; 212).

15. The system as set forth in claim 12, 13 or 14, wherein the evaluation module (117; 217; 156) is operable to train the neural function-based learning module (115).
